Europäisches Patentamt

European Patent Office

Office européen des brevets

(11) Veröffentlichungsnummer : **0 110 445 B1**

# (12) EUROPÄISCHE PATENTSCHRIFT

(45) Veröffentlichungstag der Patentschrift : 09.09.87

(21) Anmeldenummer : 83201519.2

(22) Anmeldetag : 24.10.83

(51) Int. Cl.⁴ : **G 02 B 6/44**

(54) Mantelelement für Lichtwellenleiter.

(30) Priorität : 27.10.82 DE 3239667

(43) Veröffentlichungstag der Anmeldung : 13.06.84 Patentblatt 84/24

(45) Bekanntmachung des Hinweises auf die Patenterteilung : 09.09.87 Patentblatt 87/37

(84) Benannte Vertragsstaaten :
DE FR GB NL

(56) Entgegenhaltungen :
DE-A- 2 635 917
DE-A- 3 003 760
DE-B- 2 023 542
FR-A- 2 497 964
GB-A- 1 336 363

(73) Patentinhaber : Philips Kommunikations Industrie AG
Thurn-und-Taxis-Strasse 10
D-8500 Nürnberg 10 (DE)
DE
N.V. Philips' Gloeilampenfabrieken
Groenewoudseweg 1
NL-5621 BA Eindhoven (NL)
FR GB NL

(72) Erfinder : Becker, Johann Arnold, Dr.-Ing.
Zöllner Strasse 66
D-5063 Overath (DE)
Erfinder : Wirth, Helmut
In der Follmühle 38
D-5068 Odenthal (DE)
Erfinder : Zell, Werner, Dr. rer.nat.
Gleiwitzer Strasse 15
D-5000 Köln 80 (DE)

(74) Vertreter : Peuckert, Hermann et al
Philips Patentverwaltung GmbH Billstrasse 80 Postfach 10 51 49
D-2000 Hamburg 28 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Mantelelement für Lichtwellenleiter aus Glasfasern, mit einem mindestens einen Lichtwellenleiter lose umgebenden, axial Zug- und Druckkräfte aufnehmenden Profilkörper, welcher aus einem Schlauch aus Kunststoff besteht, in dessen neutraler Biegeebene parallel zu diesem zug- und Druck aufnehmende Längselemente angeordnet sind, deren Ausdehnungskoeffizient dem der Lichtwellenleiter entspricht, und die mit dem Profilkörper zumindest abschnittsweise verbunden sind.

Bei der Herstellung von Lichtwellenleiter-Kabeln ergeben sich eine Reihe von Problemen, wenn die aus der Fertigung konventioneller Kabel bekannten Kunststoffe und Verarbeitungsmethoden Anwendung finden.

Eine grundsätzliche Schwierigkeit besteht darin, daß die zur Herstellung des sogenannten Coatings, speziell des losen Sekundär-Coatings, für die Glasfasern und des Mantels eingesetzten Kunststoffe ein erheblich anderes thermisches Verhalten als Lichtwellenleiter-Fasern besitzen. Die thermische Dehnung und Konstraktion ist um zwei Größenordnungen unterschiedlich.

Kunststoffe zeigen außerdem bei Zugbeanspruchung eine erheblich größere Dehnung, die je nach der Größe der Zugkraft reversibel oder irreversibel sein kann.

Ferner unterliegen extrudierte Thermoplaste, wie sie in der Herstellung konventioneller Fernmeldekabel verwendet werden, einem Alterungsschrumpf, der bei einer Erwärmung über Fertigungstemperatur hinaus beschleunigt abläuft, sofern er nicht im aufgetrommelten Zustand eines Kabels zumindest teilweise unterdrückt wird.

Im aufgetrommelten Zustand unterliegt das Kabel und jedes seiner Aufbauelemente einer Biegebeanspruchung. Diese führt bei einem schlauchförmig extrudierten Kunststoff ebenfalls zu einer (überwiegend reversiblen) Längenänderung, und zwar ist der Schlauch im gebogenen Zustand länger als im gestreckten.

Diese Zusammenhänge haben zur Definition des Begriffes der Überlänge geführt. Lichtwellenleiter-Fasern müssen je nach Kabelaufbau, Materialien und Fertigungsprozessen mit einer bestimmten Überlänge in das Kabel, speziell in das Sekundär-Coating, eingebracht werden, um bezogen auf die Fertigungstemperatur einen symmetrischen « TemperaturNutzbereich » zu erzielen. In der Praxis ergeben sich jedoch erhebliche Probleme.

Durch die FR-A-2 497 964 ist eine Anordnung der eingangs genannten Art bekannt. Dort und auch in der durch die DE-A-2 635 917 bekannten Anordnung sind in den Kabelmantel Zug aufnehmende oder Zug- und Druck aufnehmende Elemente eingebaut, die in ein Mantelelement eingegossen oder an ein Mantelelement geklebt sein können.

Bei der Konstruktion der bekannten Mantelelemente wird die bevorzugte Biegeebene vorher festgelegt. Entscheidend ist dabei, daß die Zug- und Druck aufnehmenden Längselemente bei Biegung in der neutralen Ebene verlaufen, so daß der Verbund des Mantelelements weniger gefährdet ist. Der im bekannten Fall wirksame Kraftschluß zwischen Längselementen und Profilkörpern kann jedoch insbesondere bei thermischen Längenänderungen und bei wiederholten Biegungen gelockert werden.

Der Erfindung liegt die Aufgabe zugrunde, ein Mantelelement für Lichtwellenleiter-Fasern zu schaffen, das folgende Forderungen erfüllt :

a) stark reduzierter bzw. möglichst unterdrückter Alterungsschrumpf des Kunststoffes,

b) auch bei wiederholten Biegungen keine oder sehr geringe reversible oder irreversible Längenänderungen.

Diese Aufgabe wird dadurch gelöst, daß die Längselemente an ihrer Außenfläche Vorsprünge aufweisen und von einem auf sie einen radialen Druck ausübenden Druckelement umgeben sind, so daß die Vorsprünge in dem Profilkörper formschlüssig eindrücken.

Durch den erfindungsgemäß erreichten Formschluß ist auch bei erheblichen und wiederholten Beanspruchungen sicher verhindert, daß sich die Zug- und Druck aufnehmenden Längselemente in Längsrichtung zu den benachbarten Kabelelementen verschieben können. Dabei bestimmen die Längselemente die Beanspruchbarkeit mit Zug- bzw. Druck in Längsrichtung.

Anhand des in den beiliegenden Zeichnungen dargestellten Ausführungsbeispiels wird die Erfindung nun näher erläutert.

Es zeigen :

Figur 1 eine Ansicht eines erfindungsgemäß verwendeten Längselements,

Figur 2 eine Ansicht, zum Teil geschnitten, eines erfindungsgemäßen Mantelelements,

Figur 3 einen Schnitt entlang der Schnittlinie III-III in Fig. 2.

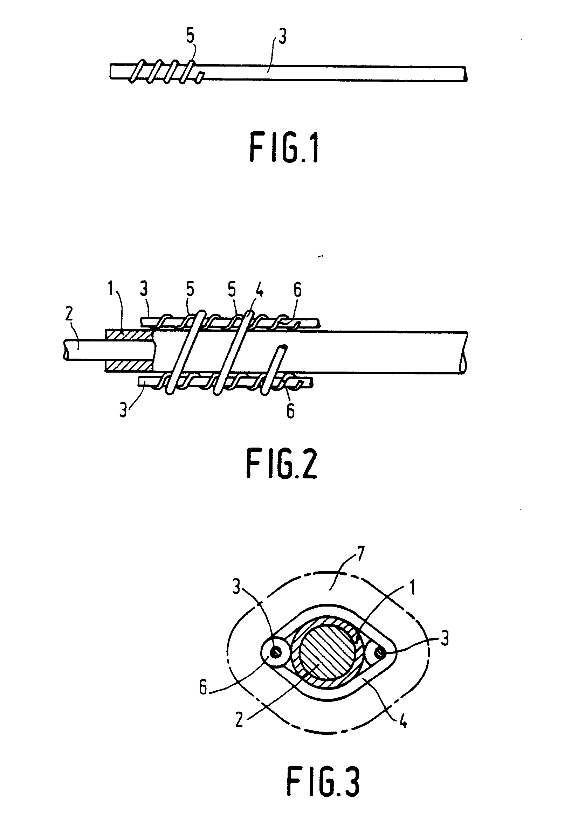

Wie sich aus den Fig. 1 und 2 ergibt, besteht ein erfindungsgemäßes Mantelelement aus einem Profilkörper 1, der als Schlauch aus Kunststoff ausgebildet ist. Dieser schlauchförmige Profilkörper 1 umgibt LichtwellenleiterFasern 2 lose, die in seinem Inneren verlaufen. Als Kunststoffmaterial für den schlauchförmigen Profilkörper 1 wird vorzugsweise thermoplastischer Kunststoff oder Polyurethan verwendet. Wie sich insbesondere aus Fig. 3 ergibt, besitzt der Schlauch 1 einen kreisförmigen Querschnitt, jedoch sind auch im Rahmen der Erfindung andere Querschnittsformen, beispielsweise ein. quadratischer oder rechteckiger Querschnitt, möglich. Im Innern des Schlauchs 1 kann eine primär-coatierte Lichtleitfaser bzw. Lichtwellenleiter-Faser 2 verlaufen, es können jedoch auch mehrere parallele oder miteinander verseilte Lichtwellenleiter-Fasern 2 im Schlauch 1 angeordnet sein. Somit kann der Profilkörper 1 entweder das sonst übliche Sekundär-Coating der Lichtwellenleiter-Fasern ersetzen oder aber als äußeres Mantelelement allgemein dienen. In der neutralen Biegeebene des schlauchförmigen Profilkörpers 1 sind einander gegenüberliegend an der Außenseite des schlauchförmigen Profilkörpers 1 zwei in Längsrichtung des Profilkörpers Zug- und Druck aufnehmende Längselemente 3 parallel zur Schlauchlängsachse angeordnet. An diesen parallel verlaufenden Längselementen wird eine quer zur Längsachse verlaufende Haltewedel 4 aus zugfestem Material befestigt oder festgelegt, deren Windungen je nach den Abmessungen des Mantelelements einen Abstand von einigen Zentimetern besitzen, und deren Schlaglänge so eng ist, daß ihre Windungen einen Winkel von mehr als etwa 45o mit der Mantellängsachse bilden. Die hierdurch entstehende Anordnung, deren äußere Kontur nicht vollständig rund ist, läßt sich in eine Richtung leicht und senkrecht dazu praktisch nicht biegen. Durch die Haltewendel (4), mit der ein radialer Druck auf die Längselemente ausgeübt wird, wird eine kraft- und formschlüssige Verbindung zwischen den Längselementen 3 und dem Profilkörper 1 geschaffen. Weiterhin ergibt sich eine ebensolche kraft- und formschlüssige Verbindung zwischen der Haltewendel 4 und den Längselementen 3. Somit unterdrücken die Längselemente, aufgrunddessen daß sie einen den im Mantelelement angeordneten Lichtleitfaser 2 entsprechenden thermischen Ausdehnungskoeffizienten haben, thermische Längenänderungen, und verhindern Schrumpf des Mantels relativ zu den Lichtleitfasern. Damit eine form- und kraftschlüssige Verbindung zwischen den Längselementen 3 und dem Profilkörper 1 einerseits und den Längselementen 3 und der Haltewendel 4 andererseits erreicht werden kann, weisen die Längselemente 3 Vorsprünge 5 auf.

Mit diesen Vorsprüngen 5 drücken sich die Längselemente 3 unter der radialen Druckbeanspruchung durch die Haltewendel 4 in den Profilkörper 1 ein. Desgleichen wird die Haltewendel 4 mit ihren Windungen zwischen den einzelnen Vorsprüngen 5 formschlüssig fixiert. In dem dargestellten Ausführungsbeispiel ist eine zweckmäßige Bildung der Vorsprünge 5 dargestellt. Hierbei bestehen die Längselemente 3 aus einem Verbundwerkstoff aus verseilten oder parallelen Epoxidharz getränkten Glasfasern. Die Dicke der Längselemente 3 ist in Abhängigkeit von dem Durchmesser des Profilkörpers 1 und den für das Kabel erforderlichen Zugkräften gewählt. Diese aus Verbundwerkstoff bestehenden Längselemente 3 werden vorzugsweise mit einer vielfaserigen Glasfaser-Litze 6, die ihrerseits mit Epoxidharz imprägniert werden kann, so eng bewickelt, daß in engem Abstand die Vorsprünge 5 aufeinander folgen. Diese Bewicklung wird ebenfalls vorzugsweise in Epoxidharz imprägniert, gehärtet und so auf den Längselementen 3 festgelegt.

In dem dargestellten Ausführungsbeispiel wird die Haltewendel 4 aus einer Litze aus zuafesten Fäden Aus Glasfasern gebildet. Es liegt jedoch ebenfalls im Rahmen der Erfindung, wenn die Haltewendel 4 aus bandförmigem, zugfestem Material gebildet wird. Darüber hinaus könnte auch metallisches Material, sei es als Band oder als Draht eingesetzt werden. Auch die im dargestellten Ausführungsbeispiel dargestellte Ausführungsform der Vorsprünge 5 könnte auf andere Weise erzeugt werden. Dies insbesondere auch dann, wenn die Längselemente 3 nicht aus dem Glasfaserverbundwerkstoff gebildet sind, beispielsweise aus anderen Werkstoffen, die einen den Glasfasern 2 entsprechenden thermischen Ausdehnungskoeffizienten besitzen, beispielsweise Stahlwerkstoffe, wie Invar-Stahl, oder Verbundelemente aus Kohlestoffasern.

Weiterhin kann es erfindungsgemäß möglich sein, das Druckelement 4 beispielsweise aus einem extrudierten Kunststoffprofil zu bilden. Wichtig hierbei ist wiederum, daß zwischen diesem extrudierten Kunststoffprofil und den Längselementen 3 ein Kraft- und Formschluß erzielt wird.

Im dargestellten Ausführungsbeispiel, siehe Fig. 3, ist die Haltewendel 4 von einem Außenmantel 7 umgeben, der in vorteilhafter Ausführung alle verbliebenen Hohlräume füllen und mit dem Profilkörper möglichst kraftschlüssig verbunden sein kann. Im dargestellten Beispiel ist der Außenmantel 7 gestrichelt eingezeichnet. Eine derartige kraftschlüssige Verbindung des Außenmantels 7 ist jedoch nicht unbedingt erforderlich. Der Außenmantel 7 ist zweckmäßigerweise mit den Längselementen 3 und/oder dem Druckelement, der Haltewendel 4 form- und kraftschlüssig verbunden. Ein derartiger Außenmantel besteht beispielsweise aus einem thermoplastischen Kunststoff.

Der Profilkörper 1 oder der Außenmantel 7 können aber auch als sogenannter Schichtenmantel ausgebildet sein oder aus einem metallischen Wellmantel mit spiralförmiger oder ringförmiger Wellung bestehen, der mit den Längselementen 3 dann form- und kraftschlüssig verbunden ist.

In Versuchen mit dem erfindungsgemäßen Mantelelement konnte festgestellt werden, daß an den vorher plangeschliffenen Stirnflächen keine oder nur minimale Verschiebungen der Materialien gegeneinander erfolgen, und zwar weder bei Zimmertemperatur noch im kalten bzw. warmen Zustand. Demnach trat zwischen den unterschiedlichen Materialien praktisch keine Relativbewegung auf, so daß die Gesamtanordnung in ihrem Verhalten durch die Längselemente 3 bestimmt wurde.

Weiterhin kann es erfindungsgemäß zweckmäßig sein, wenn ein möglichst runder Querschnitt des Mantelelements gewünscht wird, den Profilkörper mit Nuten zu versehen, die die Längselemente ganz oder teilweise aufnehmen.

Aus demselben Grunde kann es unter Umständen auch zweckmäßig sein, wenn der Profilkörper nicht rund sondern an zwei gegenüberliegenden Seiten abgeflacht ausgeführt ist, so daß auch hier durch die Längselemente keine Abweichung vom Kreisquerschnitt erfolgt.

Das erfindungsgemäße Mantelelement ist insbesondere dafür geeignet, und zwar unter Verwendung eines geeigneten Füllmittels eine größere Zahl von verseilten oder parallelen, nur mit einem Primär-Coating versehenen, Lichtleitfasern aufzunehmen. Hierdurch ergäbe sich dann beispielsweise bei einhundert bis zweihundert Fasern ein Kabel mit sehr kleinen Außenabmessungen. Auf ein separates Sekundär-Coating für die Lichtleitfasern könnte verzichtet werden, weil das erfindungsgemäße Mantelelement bereits ein Längenänderungsverhalten besitzt, das dem der Lichtleitfasern in wesentlichen entspricht.

Es ist bereits aus dem Stand der Technik bekannt, Lichtwellenleiter-Glasfasern in einem Hüllkörper mit Glasfaserverhalten anzuordnen, wobei auch Verstärkungselemente vorgesehen werden, so z. B. aus der DE-A-29 02 576, der GB-A-1 486 768, der DE-A-29 10 135. Jedoch ist aus diesem Stand der Technik keine Verbundkonstruktion der erfindungsgemäßen Art bekannt und wird auch nicht aus diesem nahegelegt, da nicht die erfindungsgemäße Lehre daraus zu entnehmen ist, eine form- und kraftschlüssige Verbindung derart herzustellen, daß die Verbundwirkung während und nach der Biegung vollständig erhalten bleibt.

**Patentansprüche**

1. Mantelelement für Lichtwellenleiter (2) aus Glasfasern, mit einem mindestens einen Lichtwellenleiter (2) lose umgebenden, axial Zug- und Druckkräfte aufnehmenden Profilkörper (1), welcher aus einem Schlauch aus Kunststoff besteht, in dessen neutraler Biegeebene parallel zu diesem Zug- und Druck aufnehmende Längselemente (3) angeordnet sind, deren Ausdehnungskoeffizient dem der Lichtwellenleiter (2) entspricht, und die mit dem Profilkörper (1) zumindest abschnittsweise verbunden sind, dadurch gekennzeichnet, daß die Längselemente (3) an ihrer Außenfläche Vorsprünge (5) aufweisen und von einem auf sie einen radialen Druck ausübenden Druckelement (4) umgeben sind, so daß die Vorsprünge (5) in den Profilkörper (1) formschlüssig eindrücken.

2. Mantelelement nach Anspruch 1, dadurch gekennzeichnet, daß das Druckelement (4) aus einer zugfesten Bewicklung (4) aus Band-, Litzen- oder Kordelmaterial besteht.

3. Mantelelement nach Anspruch 2, dadurch gekennzeichnet, daß das Druckelement (4) aus einem extrudierten Kunststoffprofil besteht.

4. Mantelelement nach einem oder mehreren der Ansprüche 1 bis 3, dadurch gekennzeichnet, daß das Druckelement (4) von einem Außenmantel (7) umgeben ist, der mit den Längselementen (3) und/oder dem Druckelement (4) form- und kraftschlüssig verbunden ist.

5. Mantelelement nach Anspruch 4, dadurch gekennzeichnet, daß der Außenmantel (7) aus Kunststoff besteht und mit dem Profilkörper (1) kraftschlüssig verbunden ist.

6. Mantelelement nach Anspruch 4, dadurch gekennzeichnet, daß der Außenmantel (7) als metallischer Wellmantel mit spiralförmiger oder ringförmiger Wellung ausgebildet ist.

7. Mantelelement nach einem oder mehreren der Ansprüche 1 bis 6, dadurch gekennzeichnet, daß im Profilkörper (1) Nuten zur ganzen oder teilweisen Aufnahme der Längselemente (3) ausgebildet sind.

8. Mantelelement nach einem oder mehreren der Ansprüche 1 bis 7, dadurch gekennzeichnet, daß die Längselemente (3) als Verbundelemente aus parallel verlaufenden, oder verseilten, in Epoxidharz getränkten Glasfasern bestehen.

9. Mantelelement nach einem oder mehreren der Ansprüche 1 bis 7, dadurch gekennzeichnet, daß die Längselemente (3) aus Stahl, insbesondere Invar-Stahl bestehen.

10. Mantelelement nach einem oder mehreren der Ansprüche 1 bis 9, dadurch gekennzeichnet, daß der Profilkörper (1) aus thermoplastischem Kunststoff oder Polyurethan besteht.

11. Mantelelement nach einem oder mehrerer der Ansprüche 1 bis 10, dadurch gekennzeichnet, daß der Profilkörper (1) als Schichtenmantel oder metallisches Wellrohr ausgebildet ist.

**Claims**

1. A sheath for light waveguides (2) of glass fibres comprising a profiled member (1) loosely surrounding one or several light waveguides (2) and taking up axial tensile and compressive forces, which profiled member (1) comprises a hose of synthetic resin in whose neutral bending plane longitudinal elements (3) taking up tensile and compressive forces are provided parallel thereto, whose coefficient of expansion corresponds to that of the light waveguides (2), and which are form-coupled and force-coupled to the profiled member (1) at least partly, characterized in that the longitudinal elements (3) comprise projections (5) on the outside and are surrounded by a pressure element (4) exerting a radial pressure thereon, thereby pressing the projections (5) into the profiled member (1) so as to be form-coupled thereto.

2. A sheath as claimed in Claim 1, characterized in that the pressure element (4) comprises a tension-proof winding construction (4) of tape, litz wire or knurled material.

3. A sheath as claimed in Claim 2, characterized in that the pressure element (4) comprises an extruded synthetic resin profile.

4. A sheath as claimed in one or more of the Claims 1-3, characterized in that the pressure element (4) is surrounded by an outer sheath (7) which is force-coupled and form-coupled to the longitudinal elements (3) and/or the pressure element (4).

5. A sheath as claimed in Claim 4, characterized in that the outer sheath (7) comprises a synthetic resin and is force-coupled to the profiled member (1).

6. A sheath as claimed in Claim 4, characterized in that the outer sheath (7) is formed as a metallic corrugated sheath having spirallike or annular corrugations.

7. A sheath as claimed in one or more of the Claims 1-6, characterized in that grooves are formed in the profiled member (1) to fully or partly receive the longitudinal elements (3);

8. A sheath as claimed in one or more of the Claims 1-7, characterized in that the longitudinal elements (3) as connection elements comprise parallel-extending or twisted glass fibres soaked in epoxy resin.

9. A sheath as claimed in one or more of the Claims 1-7, characterized in that the longitudinal elements (3) are constructed from steel, in particular Invar steel.

10. A sheath as claimed in one or more of the Claims 1-10, characterized in that the profiled member (1) comprises a thermoplastic synthetic resin or polyurethane.

11. A sheath as claimed in one or more of the Claims 1-10, characterized in that the profiled member (1) is constructed as a laminated sheath or as a metallic corrugated tube.

**Revendications**

1. Gaine pour guide d'ondes lumineuses (2) en fibres de verre, munie d'au moins un corps profilé (1) absorbant des forces de traction et de pression et entourant, de façon détachée, un guide d'ondes lumineuses (2), qui est constitué par un tuyau souple en matière synthétique, dans la zone de courbure neutre duquel sont prévus des éléments longitudinaux (3) absorbant cette traction et pression, dont le coefficient de dilatation correspond à celui du guide d'ondes lumineuses (2), et qui sont au moins partiellement reliés au corps profilé (1), caractérisée en ce que les éléments longitudinaux (3) sont munis de parties en saillie (5) prévues sur leurs faces extérieures et sont entourés d'un élément de pression (4) exerçant une pression radiale sur ces dernières, de façon que, grâce à leurs formes, les parties en saillie (5) et les corps profilés soient reliés entre eux.

2. Gaine selon la revendication 1, caractérisée en ce que l'élément de pression (4) est constitué par un enroulement résistant à la traction (4) en matériau en forme de bande, de fil toronné ou de cordon.

3. Gaine selon la revendication 2, caractérisée en ce que l'élément de pression (4) est constitué par un profil en matière synthétique extrudée.

4. Gaine selon l'une ou plusieurs des revendications 1 à 3, caractérisée en ce que l'élément de pression (4) est entouré d'une gaine extérieure (7), qui est reliée par la forme et la force aux éléments longitudinaux (3) et à élément de pression (4).

5. Gaine selon la revendication 4, caractérisée en ce que la gaine extérieure (7) est constituée par de la matière synthétique et est reliée par la force au corps profilé (1).

6. Gaine selon la revendication 4, caractérisée en ce que la gaine extérieure (7) est sous forme d'une gaine ondulée métallique présentant une ondulation spiralée ou annulaire.

7. Gaine selon l'une ou plusieurs des revendications 1 à 6, caractérisée en ce que dans le corps profilé (1) sont réalisées des rainures pour recevoir entièrement ou partiellement les éléments longitudinaux (3).

8. Gaine selon l'une ou plusieurs des revendications 1 à 7, caractérisée en ce que les éléments longitudinaux (3) comme éléments de liaison sont constitués par des fibres de verre imprégnées de résine époxy parallèles ou toronnées.

9. Gaine selon l'une ou plusieurs des revendications 1 à 7, caractérisée en ce que les éléments longitudinaux (3) sont constitués par de l'acier, notamment de l'acier Invar.

10. Gaine selon l'une ou plusieurs des revendications 1 à 9, caractérisée en ce que le corps profilé (1) est constitué par une matière synthétique thermoplastique ou du polyuréthane.

11. Gaine selon l'une ou plusieurs des revendications 1 à 10, caractérisée en ce que le corps profilé (1) est sous forme d'une gaine stratifiée ou tube ondulé métallique.

0 110 445

FIG.1

FIG.2

FIG.3